# EUROPÄISCHE PATENTANMELDUNG

(11) **EP 2 241 650 A1**
(43) Veröffentlichungstag der Anmeldung: **20.10.2010**
(21) Anmeldenummer: 10002503.0
(22) Anmeldetag: 10.03.2010
(51) Int. Cl.: C23C 14/34, B29D 30/06, B29C 33/56, B29C 33/58

(54) **Element einer Vulkanisierform, eine Vulkanisierform sowie ein Verfahren zur Herstellung eines Elementes einer Vulkanisierform**

(30) Priorität: 15.04.2009 DE 102009017127
(71) Anmelder: Dahmen GmbH, 52477 Alsdorf (DE); Continental Aktiengesellschaft, D-30165 Hannover (DE)
(72) Erfinder: Drews, Marko, 30173 Hannover (DE); Hohlbein, Michael, 30926 Seelze (DE); Kraus, Armin, Dr., 52134 Herzogenrath (DE)
(74) Vertreter: Berkenbrink, Kai-Oliver

(57) **Zusammenfassung**

Die Erfindung betrifft ein Element (3,1) einer Vulkanisierform (1) zur Herstellung von Gummiprodukten, eine Vulkanisierform mit wenigstens einem solchen Element sowie ein Verfahren zur Herstellung eines Elementes (3,1) einer Vulkanisierform. Das Element (3,1) weist eine durch ein Vakuum-Beschichtungs-Verfahren aufgefragene Beschichtung auf.

## Beschreibung

Die Erfindung betrifft ein Element einer Vulkanisierform zur Herstellung von Gummiprodukten, eine Vulkanisierform mit wenigstens einem solchen Element sowie ein Verfahren zur Herstellung eines Elementes einer Vulkanisierform.

Vulkanisierformen zur Herstellung von Gummiprodukten, insbesondere zur Herstellung von Fahrzeugreifen, bestehen aus mehreren Elementen. Im Falle einer sogenannten segmentierten Reifenform sind beispielsweise die Elemente einer solchen Vulkanisierform zum einen die sogenannten Formsegmente, die ringförmig anordenbar sind und die bei der Vulkanisation eines Gummiproduktes in Form eines Fahrzeugreifens die spätere Lauffläche des Fahrzeugreifens formen. Weitere Elemente eine solchen Vulkanisierform sind die Seitenschalen, die die ringförmig angeordneten Formsegmente seitlich abdecken und bei Gummiprodukten in Form von Fahrzeugreifen zur Formung der Seitenflächen der Fahrzeugreifen dienen. Elemente einer solchen Vulkanisierform sind schließlich die Wulstringe, die Bestandteil der Seitenschalen sein können, und die bei Gummiprodukten in Form von Fahrzeugreifen bei deren Vulkanisation die Bereiche des Fahrzeugreifens formen, die zum Anliegen gegen die Felge eines Fahrzeugrades bestimmt sind.

Zur Formung der Lauffläche eines Fahrzeugreifens weisen die Formsegmente hervorstehende Bereiche in Form von Rippen und Lamellen auf. Die Rippen sind üblicherweise einteilig aus dem Formsegment ausgeformt und dienen zur Formung von Nuten in der Lauffläche des Fahrzeugreifens; diese Nuten dienen insbesondere dazu, bei der Anwendung des Fahrzeugreifens Wasser von der Kontaktfläche zwischen Fahrzeugreifen und Untergrund abzuleiten. Teilweise sind die Rippen auch als eigenständige Komponenten ausgebildet, die über Befestigungsmittel bzw. -verfahren an dem Formsegment befestigt werden. Die Lamellen dienen zur Formung von schmalen Schlitzen in der Lauffläche des Fahrzeugreifens; durch die Schlitze wird der Kontakt ("Grip") zwischen Fahrzeugreifen und Untergrund verbessert. Die Lamellen sind regelmäßig als eigenständige Komponenten ausgebildet, die über Befestigungsmittel bzw. -verfahrenan dem Formsegment befestigt werden.

Gummiprodukte können in den vorbezeichneten Vulkanisierformen unter Verwendung eines vorgefertigten Grünlings hergestellt werden. Zur Herstellung des Gummiproduktes, insbesondere eines Fahrzeugreifens, wird in diesem Fall der zu vulkanisierende Grünling, also das unvulkanisierte Gummiprodukt, zunächst in die geöffnete Vulkanisierform eingebracht. Nach dem Schließen der Vulkanisierform presst ein druckbeaufschlagter Heizbalg den Grünling gegen die Elemente der Vulkanisierform. Der Grünling passt sich dabei mit seiner Oberfläche an die Geometrie der Oberflächenabschnitte der Elemente der Vulkanisierform an, die dabei in Kontakt mit ihm treten, wodurch das Oberflächenprofil des Gummiproduktes geformt wird. Nachdem der Vulkanisiervorgang abgeschlossen ist, wird das vulkanisierte Gummiprodukt der Vulkanisierform entnommen.

Die Elemente einer Vulkanisierform können Ent- und Belüftungsmittel aufweisen. Durch diese kann die Vulkanisierform beim Schließen entlüftet werden, um den Kontakt zwischen Grünling und Vulkanisierform zu ermöglichen. Nach Beendigung der Vulkanisation kann die Vulkanisierform durch diese Ent- und Belüftungsmittel belüftet werden, um das vulkanisierte Gummiprodukt aus der Form lösen zu können.

Entsprechende Ent- und Belüftungsmittel sind regelmäßig in Form von Hülsen oder Ventilen vorgesehen, die in Öffnungen in der Wandung der Elemente einer Vulkanisierform angeordnet sind. Die Ent- und Belüftungsmitteln stellen eine strömungstechnische Verbindung zwischen dem Inneren der Vulkanisierform und der Atmosphäre her.

Entsprechend gestaltete Vulkanisierformen haben sich zur Herstellung von Gummiprodukten, insbesondere zur Herstellung von Fahrzeugreifen, bisher grundsätzlich gut bewährt.

Zu Problemen kann es jedoch insbesondere bei der Entformung der Gummiprodukte kommen, also bei dem Herausnehmen der vulkanisierten Gummiprodukte aus der Vulkanisierform. Denn Gummiprodukte, insbesondere moderne Fahrzeugreifen weisen eine zunehmend kompliziertere Oberflächengeometrie auf, die teilweise auch die Formung von Geometrien mit Hinterschnitten erfordert. Zur Entformung entsprechend geformter Fahrzeugreifen aus einer Vulkanisierform sind teilweise erhebliche Kräfte aufzubringen. Neben der erheblichen Energie, die zur Entformung solcher Fahrzeugreifen aus einer Vulkanisierform notwendig ist, ist hieran insbesondere nachteilig, dass die hohen Entformungskräfte zur Beschädigung der Vulkanisierform oder des Gummiproduktes führen können, beispielsweise können die empfindlichen Lamellen beschädigt oder sogar aus den Formsegmenten herausgerissen werden.

Problematisch ist ferner, dass Gummireste nach der Entformung an der Vulkanisierform haften bleiben können. Diese anhaftenden Gummireste können insbesondere die Ent- und Belüftungsmittel zusetzen. Zur Entfernung dieser Gummireste müssen Vulkanisierformen daher regelmäßig gereinigt werden. Zur Reinigung von Vulkanisierformen werden üblicherweise Trockeneisstrahl-, Sandstrahl- oder Glaskugelstrahlverfahren eingesetzt, welche die Vulkanisierform schädigen können und zum Verschleiß der Vulkanisierform beitragen.

Diese Probleme sind bekannt und es hat in der Vergangenheit daher nicht an Versuchen gefehlt, diese Probleme bei gattungsgemäßen Vulkanisierformen zu lösen. Insbesondere wurde versucht, diese Probleme durch spezielle Geometrien der Elemente einer Vulkanisierform, die ein leichteres Entformen ermöglichen sollten, zu lösen. Die hierbei erzielten Ergebnisse waren jedoch nicht immer zufriedenstellend.

Ferner ist es bekannt, flüssige Trennmittel zu verwenden, die ein leichteres Entformen der Gummiprodukte aus der Vulkanisierform ermöglichen sollen. Die Verwendung entsprechender Trennmittel ist jedoch teuer und aufwändig, da sie in regelmäßigen Abständen erneut aufgetragen werden müssen. Darüber hinaus geht die Verwendung von Trennmitteln mit einer erheblichen Verschmutzung einher.

Zur Lösung der vorbezeichneten Probleme wird erfindungsgemäß nunmehr ein völlig neuartiger Lösungsansatz gewählt. Danach ist erfindungsgemäß vorgesehen, dass Elemente der Vulkanisierform eine dauerhafte Beschichtung erhalten, die Oberflächeneigenschaften der Elemente derart verbessert, dass die vorgenannten Probleme bei der Entformung nicht mehr auftreten.

Problematisch bei der Verwirklichung dieses Erfindungsgedankens war es jedoch, eine entsprechende Beschichtung zu verwirklichen. Denn die im wesentlichen aus Stahl oder Aluminium bestehenden Elemente einer Vulkanisierform lassen sich nur schwer mit vollkommen artfremden Werkstoffen, aus denen in Frage kommende Beschichtungen bestehen müssten, beispielsweise Beschichtungen aus keramischen Werkstoffen, beschichten.

Vor diesem Hintergrund liegt der Erfindung die Aufgabe zugrunde, ein Element einer Vulkanisierform zur Herstellung von Gummiprodukten, insbesondere zur Herstellung von Fahrzeugreifen, zur Verfügung zu stellen, das eine dauerhafte Beschichtung, insbesondere aus einem artfremden Werkstoff, aufweist.

Zur Lösung dieser Aufgabe wird zur Verfügung gestellt ein Element einer Vulkanisierform zur Herstellung von Gummiprodukten, insbesondere zur Herstellung von Fahrzeugreifen, das wenigstens eine durch ein Vakuum-Beschichtungs-Verfahren aufgetragene Beschichtung aufweist.

Die Erfindung beruht insbesondere auf der Erkenntnis, dass mittels Vakuum-Beschichtungs-Verfahren aufgetragene Beschichtungen (nachfolgend auch nur als "Beschichtung" oder "Beschichtungen" bezeichnet) sehr vorteilhaft auf Elemente einer Vulkanisierform zur Herstellung von Gummiprodukten aufgetragen werden können. So erweisen sich entsprechend aufgetragene Beschichtungen als sehr dauerhaft beziehungsweise beständig. Ferner lassen sich auf das aus Stahl und/oder Aluminium bestehende Elemente einer Vulkanisierform Beschichtungen aus ganz anderen Werkstoffen aufbringen.

Bevorzugt sind erfindungsgemäß Vakuum-Beschichtungs-Verfahren in Form von CVD-Verfahren oder PVD-Verfahren vorgesehen.

Die Erkenntnis, das Vakuum-Beschichtungs-Verfahren, insbesondere CVD- oder PVD-Verfahren, zur Beschichtung von Elementen einer Vulkanisierform verwendet werden können, ist umso überraschender vor dem Hintergrund des Umstandes, wonach entsprechende Verfahren bisher insbesondere allein zum Auftragen von Beschichtungen in der Elektronik-, Halbleiter- und Wafertechnologie, sowie zum Aufbringen von Wärmeschutzschichten auf Glas oder von Barriereschichten auf Kunststofffolie eingesetzt wurden. PVD-Verfahren wurden zudem insbesondere zur Beschichtung von Schneidwerkzeugen verwendet.

Erfindungsgemäß hat sich nun herausgestellt, das Vakuum-Beschichtungs-Verfahren hervorragend zum Auftragen von Beschichtungen auf Elemente einer Vulkanisierform verwendet werden können, da sich mit entsprechenden Verfahren auf die im wesentlichen aus Stahl oder Aluminium bestehenden Elemente einer Vulkanisierform Beschichtungen aus vollkommen artfremden Werkstoffen dauerhaft auftragen lässt.

Beim CVD-Verfahren (chemical vapor deposition), auch chemische Gasabschneidung genannt, wird im Vakuum auf der erhitzten Oberfläche eines Substrates aufgrund einer chemischen Reaktion aus einer Gasphase eine Feststoffkomponente abgeschieden. Beim Plasma-CVD-Verfahren unterliegt das Substrat einer geringeren Erhitzung. Mit diesen Verfahren lassen sich auch auf den kompliziertesten Oberflächengeometrien äußerst gleichmäßige Beschichtungen auftragen.

Beim PVD-Verfahren (physical vapor deposition), auch physikalische Gasabscheidung genannt, wird das Beschichtungsmaterial durch rein physikalische Methoden in die Gasphase überführt, um dann im Vakuum auf dem Substrat abgeschieden zu werden. Vorteilhaft am PVD-Verfahren ist auch, dass das Substrat bei diesem Beschichtungsverfahren nicht erhitzt werden muss.

Durch CVD- oder PVD-Verfahren lassen sich Beschichtungen in Dicken von 0,1 bis 30 µm auftragen. Erfindungsgemäß liegen die Dicken von mittels CVD- oder PVD-Verfahren aufgetragenen Beschichtungen bevorzugt im Bereich zwischen 0,1 und 10 µm, also beispielsweise auch im Bereich zwischen 0,1 und 6 µm oder zwischen 1 und 6 µm.

Wesentlich an der Erfindung ist insbesondere auch, dass die durch ein Vakuum-Beschichtungs-Verfahren aufgetragene Beschichtung auf dem Element dauerhaft aufgebracht ist.

Das erfindungsgemäße Element einer Vulkanisierform zur Herstellung von Gummiprodukten kann insbesondere ein Formsegment einer Vulkanisierform, eine Seitenschale einer Vulkanisierform oder ein Wulstring einer Vulkanisierform sein.

Bevorzugt kann das Element beispielsweise wenigstens eine durch ein Vakuum-Beschichtungs-Verfahren aufgetragene Beschichtung aus einem oder mehreren der folgenden Werkstoffe: eine oder mehrere amorphe Kohlenwasserstoffschichten, eine oder mehrere keramische Schichten oder Kombinationen daraus.

Amorphe Kohlenwasserstoffschichten können insbesondere beispielsweise DLC-Schichten (diamond like carbon-Schichten), insbesondere solche des allgemeinen Typs a-C:H + X (mit X= Cr, W, Si, F oder Zr) in unterschiedlichen stöchiometrischen Zusammensetzungen sein.

Keramische Schichten können insbesondere beispielsweise die folgenden Schichten sein:
- keramische Schichten auf Basis Chrom, insbesondere solche des allgemeinen Typs CrXY (mit X= ein oder mehrere Metalle, Übergangsmetalle oder Halbmetalle und mit Y= ein oder mehrere Elemente oder Verbindungen aus der Gruppe der Chalcogene, Halogene oder Carbide) in unterschiedlichen stöchiometrischen Zusammensetzungen, insbesondere CrN, CrCC, CrAlN, CrAlON oder CrAISiN in unterschiedlichen stöchiometrischen Zusammensetzungen;
- keramische Schichten auf Basis Titan, insbesondere solche des allgemeinen Typs TiXY (mit X= ein oder mehrere Metalle, Übergangsmetalle oder Halbmetalle und mit Y= ein oder mehrere Elemente oder Verbindungen aus der Chalcogene, Halogene oder Carbide) in unterschiedlichen stöchiometrichen Zusammensetzungen, insbesondere TiN, TICC, TiAlON, TiAlSiN in unterschiedlichen stöchiometrischen Zusammensetzungen;
- Schichten aus SiAlON in unterschiedlichen stöchiometrischen Zusammensetzungen;
- Schichten aus WCC (Wolframcarbid) in unterschiedlichen stöchiometrischen Zusammensetzungen.

Auf das Element aufgetragene Beschichtungen können verschiedenen Zwecken dienen. Insbesondere kann vorgesehen sein, dass das Element wenigstens eine der folgenden Beschichtungen aufweist: eine oder mehrere reibungsmindernde Beschichtungen, eine oder mehrere korrosionshemmende Beschichtungen, eine oder mehrere verschleißhemmende Beschichtungen oder eine oder mehrere härtesteigernde Beschichtungen.

Durch die konkrete Werkstoffauswahl kann die Art der Beschichtung eingestellt werden. Dabei können insbesondere die vorgenannten Werkstoffe eingesetzt werden. Durch geeignete Kombination dieser Werkstoffe sowie der Art des Auftragsverfahrens (insbesondere CVD- oder PVD-Verfahren) können insbesondere auch Beschichtungen vorgesehen sein, die mehrere der vorbezeichneten Eigenschaften in sich vereinen, also beispielsweise können Beschichtungen vorgesehen sein, die gleichzeitig sowohl reibungsmindernd als auch korrosions- und/oder verschleißhemmend sind.

Eine reibungsmindernde Beschichtung kann insbesondere eine solche Beschichtung sein, durch welche die Reibung an dem durch die Beschichtung beschichteten Bereich des Elementes verringert wird. Hierdurch wird eine leichtere Entformung des vulkanisierten Gummiproduktes aus der Vulkanisierform ermöglicht. Gleichzeitig verringert eine solche Beschichtung die Gefahr des Anhaftens von Gummiresten an der Oberfläche des Elementes. Soweit das erfindungemäße Element eine solche, reibungsmindernde Beschichtung aufweist, lassen sich die vulkanisierten Gummiprodukte wesentlich leichter aus der Vulkanisierform lösen, womit die Entformungskräfte wesentlich reduziert werden können. Gleichzeitig lässt sich hierdurch die Gefahr einer Beschädigung des Gummiproduktes und/oder der Elemente, insbesondere eine Beschädigung oder ein Herausreißen der Lamellen von Formsegmenten, reduzieren. Soweit die Anhaftung von Gummiresten an der Oberfläche des Elementes verringert wird, müssen die Elemente deutlich seltener gereinigt werden, so dass entsprechende Ausfallzeiten für die Reinigung und der Verschleiß der Elemente ebenfalls deutlich verringert werden.

Nach einer Ausführungsform ist vorgesehen, dass das erfindungsgemäße Element verschiedene durch ein Vakuum-Beschichtungs-Verfahren aufgetragene Beschichtungen aufweist. Hierdurch können verschiedene Bereiche des Elementes mit einer dort jeweils erforderlichen Beschichtung versehen werden. Beispielsweise können demnach Bereiche des Elementes, die einem verstärkten Verschleiß unterliegen, mit einer besonders verschleißhemmenden Beschichtung versehen sein und solche Bereiche, die eine komplizierte Geometrie aufweisen und an denen das vulkanisierte Gummiprodukt demnach gegebenenfalls nur schwer zu entformen ist, mit einer besonders reibungsmindernden Beschichtung versehen sein.

Nach einer Ausführungsform ist vorgesehen, dass Bereiche des erfindungsgemäßen Elementes wenigstens eine Beschichtung aufweisen, die durch ein CVD-Verfahren aufgetragen ist und andere Bereiche des erfindungsgemäßen Elementes wenigstens eine Beschichtung aufweisen, die durch ein PVD-Verfahren aufgetragen ist. Hierdurch kann für definierte Bereiche des Elementes das für diese Bereiche jeweils vorteilhafteste Vakuum-Beschichtungs-Verfahren zum Auftragen der Beschichtung vorgesehen sein. Demnach können beispielsweise solche Bereiche des Elementes, die eine komplizierte Geometrie aufweisen, eine Beschichtung aufweisen, die durch ein CVD-Verfahren aufgetragen worden ist. Ferner können beispielsweise solche Bereiche des Elementes, die einer zum Auftragen einer Beschichtung durch ein CVD-Verfahren notwendigen Erwärmung nicht ausgesetzt werden können, insbesondere beispielsweise Bereiche des Elementes, die aus Aluminium gefertigt sind, eine über ein PVD-Verfahren aufgetragene Beschichtung aufweisen.

Erfindungsgemäß können die durch ein CVD-Verfahren aufgetragenen Beschichtungen insbesondere durch ein Plasma-CVD-Verfahren aufgetragen sein.

Die durch ein PVD-Verfahren aufgetragenen Beschichtungen können erfindungsgemäß insbesondere durch ein Sputterfahren aufgetragen sein, insbesondere durch ein MS-Verfahren (magnetron sputtering), insbesondere durch ein HPMS-Verfahren (high pulse magnetron sputtering). Bevorzugt sind die durch ein PVD-Verfahren aufgetragenen Beschichtungen durch ein Niedertemperaturverfahren aufgetragen, insbesondere durch ein Verfahren bei einer Verfahrenstemperatur unterhalb 500°C, noch bevorzugter unterhalb 200°C; der Vorteil entsprechend niedriger Temperaturen liegt insbesondere darin, dass die Elemente hierdurch nicht beschädigt werden können.

Neben den vorgenannten Vorteilen hat sich erfindungsgemäß herausgestellt, dass das Auftragen von Beschichtungen auf ein Element einer Vulkanisierform durch ein Vakuum-Beschichtungs-Verfahren weitere Vorteile aufweist. So sind Beschichtungen herstellbar, die durch andere Verfahren überhaupt nicht auf einem solchen Element anordenbar wären, da sie thermodynamisch instabil wären. Des weiteren lassen sich wegen der besonders geringen Dicke der Beschichtungen die Eigenschaften von anscheinend auch unvereinbaren Werkstoffkombinationen miteinander kombinieren, beispielsweise die hohe Duktilität von Metall (des Stahls oder Aluminiums des Elementes) mit der hohen Härte einer Beschichtung. Ferner erlauben es die großen Freiheitsgrade bei der Kombination unterschiedlicher Beschichtungsbestandteile, Beschichtungen für einen definierten Zweck vorzusehen und die Beschichtungsbestandteile hierfür entsprechend zu kombinieren.

Erfindungsgemäß können insbesondere solche Bereiche des Elementes eine Beschichtung aufweisen, die beim Vulkanisieren in Kontakt mit dem Gummi des zu vulkanisierenden Gummiproduktes treten.

Bei Vakuum-Beschichtungs-Verfahren wird das zu beschichtende Substrat, im vorliegenden Fall also ein Element einer Vulkanisierform, in einer Vakuumkammer beschichtet. Da Elemente einer Vulkanisierform eine erhebliche Größe aufweisen können, wären daher Vakuumkammern mit einer erheblichen Größe notwendig, wenn sämtliche Bereiche des Elementes, die beim Vulkanisieren in Kontakt mit dem Gummi des zu vulkanisierenden Gummiproduktes treten, durch ein Vakuum-Beschichtungs-Verfahren beschichtet werden sollen.

Eine ganz wesentliche erfindungsgemäße Erkenntnis liegt nunmehr darin, dass es nicht notwendig ist, sämtliche Bereiche des Elementes, die beim Vulkanisieren in Kontakt mit dem Gummi des zu vulkanisierenden Gummiproduktes treten, mit einer Beschichtung zu versehen. Vielmehr hat sich erfindungsgemäß herausgestellt, dass es ausreichend sein kann, dass das Element die Beschichtung nur abschnittsweise aufweist.

Der wesentliche Vorteil, der sich aus dieser erfindungsgemäßen Erkenntnis ziehen lässt, liegt darin, dass nicht mehr das gesamte Element in einer Vakuumkammer beschichtet werden muss, sondern allein definierte Bereiche des Elementes. Nach einer Fortführung dieses Erfindungsgedankens können demnach insbesondere solche Bereiche des Elementes eine Beschichtung aufweisen, die als eigenständige Komponenten ausgebildet sind, also solche Komponenten des Elementes, die zunächst einzeln gefertigt werden und die erst anschließend mit der "Rohform" des Elementes verbunden und zum fertigen Element konfektioniert werden.

Entsprechend einzeln gefertigte Komponenten des Elementes, die eine Beschichtung aufweisen, können insbesondere eine oder mehrer der folgenden Komponenten sein: Lamellen, Ent- und Belüftungsmittel, Rippen oder Wechselstempel (insbesondere solche mit Beschriftungen und/oder Gravuren).

Da es sich bei diesen Komponenten regelmäßig um Kleinteile handelt, können diese sehr vorteilhaft entweder in einer (kleinen) Vakuumbeschichtungskammer oder sehr zahlreiche Komponenten in einer größeren Kammer durch ein Vakuum-Beschichtungs-Verfahren beschichtet und anschließend mit weiteren Komponenten zu einem Element einer Vulkanisierform konfektioniert werden. Die Beschichtung des Elementes lässt sich damit auch unter Kostengesichtspunkten sehr günstig herstellen.

Nach einer Ausführungsform ist danach ein Element einer Vulkanisierform vorgesehen, bei dem wenigstens ein Teil der folgenden Komponenten eine durch ein Vakuum-Beschichtungs-Verfahren aufgetragene Beschichtung aufweist: Lamellen, Ent- und Belüftungsmittel, Rippen oder Wechselstempel (insbesondere solche mit Beschriftungen und/oder Gravuren). Nach einer Fortführung dieses Erfindungsgedankens ist ein Element einer Vulkanisierform vorgesehen, bei dem wenigstens ein Teil dieser vorgenannten, beschichteten Komponenten wenigstens eine durch ein Vakuum-Beschichtungs-Verfahren aufgetragene Beschichtung aufweist und die übrigen Bereiche des Elementes keine durch ein Vakuum-Beschichtungs-Verfahren aufgetragene Beschichtung aufweisen.

Die beschichteten Komponenten des Elementes können beispielsweise mittels wenigstens einer der folgenden Techniken mit weiteren, insbesondere unbeschichteten, Komponenten des Elementes zum Element verbunden sein: Kleben, Löten, Verschweißen, Eingießen (der beschichteten Komponenten in eine unbeschichtete Komponente) oder (mechanische) Verriegelungstechniken.

Es kann vorgesehen sein, dass nur solche Lamellen des Elementes eine durch ein Vakuum-Beschichtungs-Verfahren aufgetragenen Beschichtung aufweisen, die eine komplizierte, dreidimensionale Struktur aufweisen, beispielsweise Tropfenlamellen, Zick-Zack-Lamellen oder Lamellen mit einer Wabenstruktur.

Als Ent- und Belüftungsmittel für Vulkanisierformen sind insbesondere Entlüftungsstifte und Entlüftungsventile bekannt. Diese Entlüftungsstifte und Entlüftungsventile werden in Öffnungen in der Außenwandung eines Elementes einer Vulkanisierform eingebracht und dienen zum Ent- und Belüften des Innenraums einer Vulkanisierform. Entlüftungsstifte sind im wesentlichen rohr- beziehungsweise hülsenförmig gestaltet und dienen zur Querschnittsverengung der in die Wandung des Elementes eingebrachten Öffnung. Entlüftungsventile weisen üblicherweise ebenfalls einen im wesentlichen rohr- oder hülsenförmigen Außenkörper auf, in dem ein federbelastetes Sperrorgan angeordnet ist, durch das der rohr- oder hülsenförmige Körper geschlossen und geöffnet werden kann. Erfindungsgemäß können insbesondere entsprechende Entlüftungsstifte und/oder Entlüftungsventile eines Elementes durch ein Vakuum-Beschichtungs-Verfahren beschichtet sein.

Gegenstand der Erfindung ist ferner eine Vulkanisierform, insbesondere für Fahrzeugreifen, die wenigstens ein Element, wie vorstehend beschrieben, aufweist.

Eine wenigstens ein erfindungsgemäßes Element aufweisende Vulkanisierform kann grundsätzlich zur Herstellung von beliebigen Gummiprodukten verwendet werden, insbesondere jedoch zur Herstellung von Fahrzeugreifen, beispielsweise Reifen für Personenkraftwagen, Lastkraftwagen oder Baustellenfahrzeuge.

Gegenstand der Erfindung ist ferner ein Verfahren zur Herstellung eines Elementes einer Vulkanisierform zur Herstellung von Gummiprodukten, insbesondere zur Herstellung von Fahrzeugreifen, bei dem zunächst wenigstens eine erste Komponente zur Verfügung gestellt wird, die keine durch ein Vakuum-Beschichtungs-Verfahren aufgetragene Beschichtung aufweist, und wenigstens eine zweite Komponente zur Verfügung gestellt wird, die eine durch ein Vakuum-Beschichtungs-Verfahren aufgetragene Beschichtung aufweist, und wobei die wenigstens eine erste und die wenigstens eine zweite Komponente anschließend zu dem Element einer Vulkanisierform konfektioniert werden.

Die zweiten Komponenten bei diesem Verfahren können insbesondere die vorbeschriebenen Bereiche beziehungsweise Komponenten des Elementes sein, die eine Beschichtung aufweisen sollen, also insbesondere wenigstens eine der folgenden Komponenten: Lamellen, Ent- und Belüftungsmittel, Rippen oder Wechselstempel (insbesondere solche mit Beschriftungen und/oder Gravuren).

Die erste Komponente kann insbesondere die "Rohform" eines erfindungsgemäßen Elementes sein, also das Element ohne die Komponenten, die durch ein Vakuum-Beschichtungs-Verfahren mit einer Beschichtung versehen werden.

In der nachfolgenden Figurenbeschreibung werden ein Ausführungsbeispiel einer erfindungsgemäßen Vulkanisierform sowie eines erfindungsgemäßen Elementes einer Vulkanisierform näher erläutert.

Dabei zeigt
- Fig. 1: eine Vulkanisierform in einer perspektivischen Darstellung,

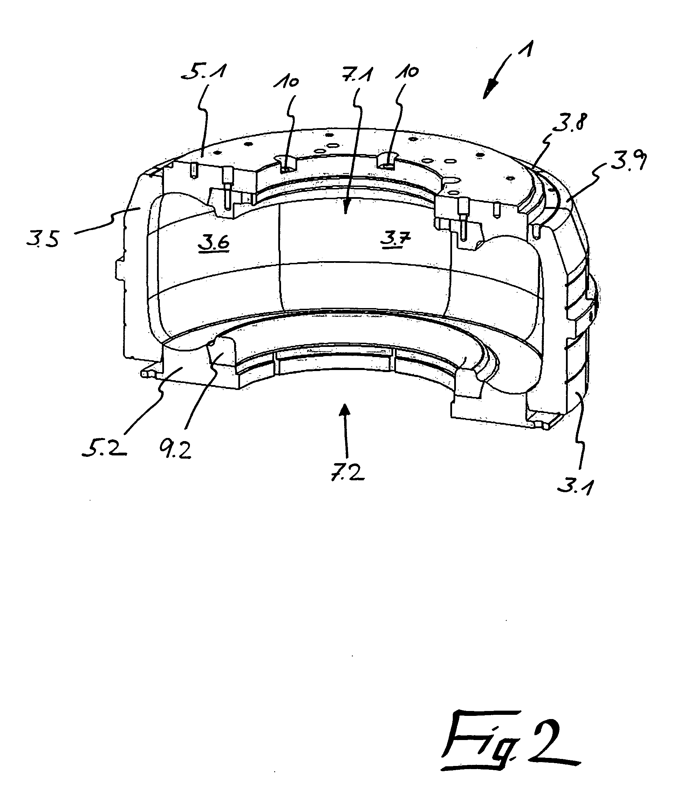

- Fig. 2: eine Schnittansicht der Vulkanisierform gemäß Fig. 1 in einer perspektivischen Darstellung,
- Fig. 3: eine Explosivansicht der Vulkanisierform gemäß Fig. 1 in einer perspektivischen Darstellung,

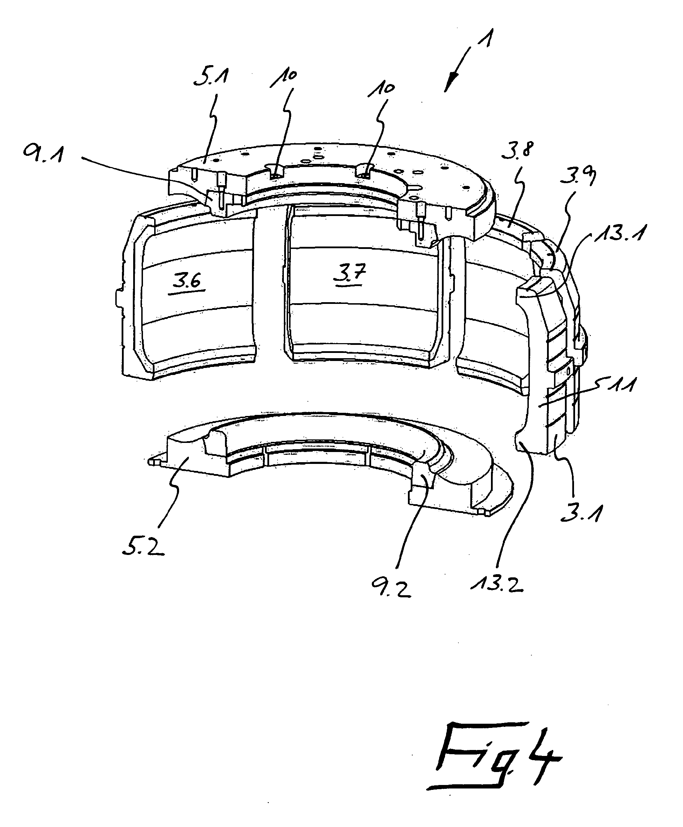

- Fig. 4: eine Schnittansicht der Explosivansicht der Vulkanisierform gemäß Fig. 1 in einer perspektivischen Darstellung,
- Fig. 5: ein Formsegment der Vulkanisierform gemäß Fig. 1 in einer perspektivischen Darstellung,
- Fig. 6: eine Schnittansicht eines Bereiches des Formsegmentes gemäß Fig. 5 und
- Fig. 7: eine weitere Schnittansicht eines Bereiches des Formsegmentes gemäß Fig. 5.

In den Figuren sind gleichwirkende Komponenten teilweise mit den gleichen Bezugszeichen versehen.

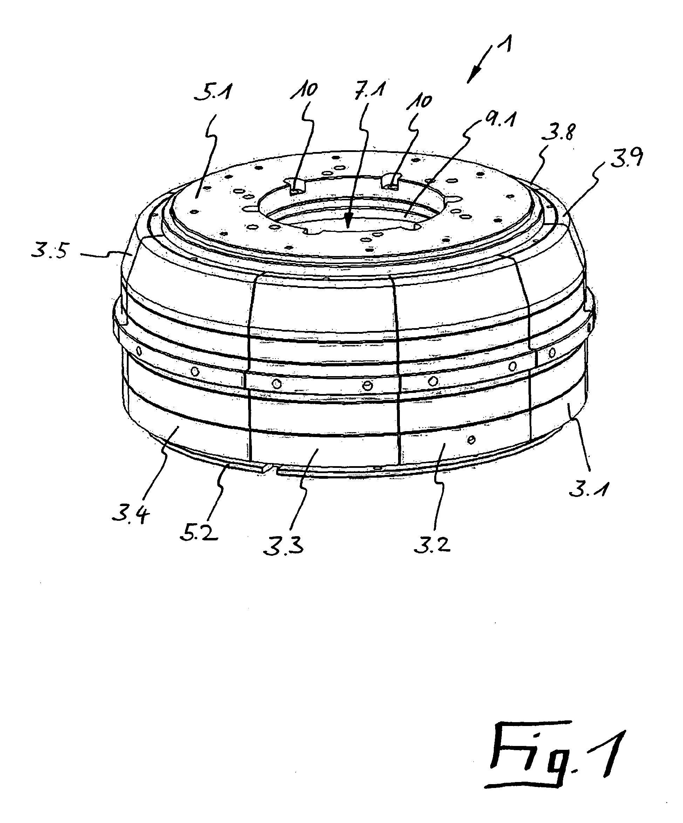

Die in Fig. 1 in ihrer Gesamtheit mit dem Bezugszeichen 1 gekennzeichnete Vulkanisierform dient zur Herstellung von Fahrzeugreifen.

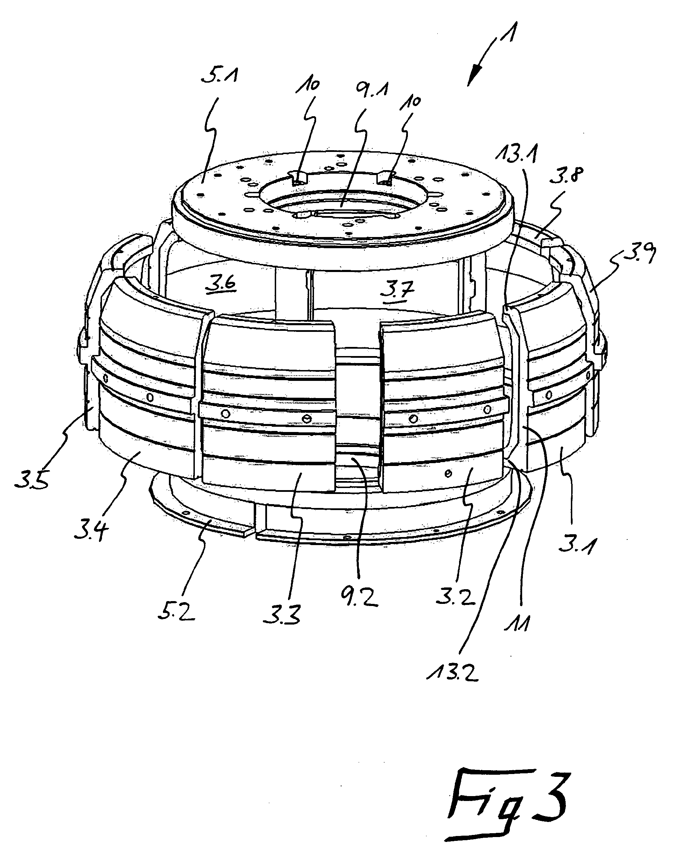

Die Vulkanisierform 1 weist eine im wesentlichen trommelartige Form auf. Wie in der Explosivansicht gemäß Fig. 3 gut zu erkennen, weist die Vulkanisierform 1 umfangsseitig neun ringförmig angeordnete Formsegmente 3.1 - 3.9 auf. Der von den ringförmig angeordneten Formsegmenten 3.1 - 3.9 umschlossene, freie Innenraum ist beidseitig von je einer im wesentlichen scheibenförmigen Seitenschale 5.1, 5.2 abgedeckt. Die zwei Seitenschalen 5.1, 5.2 sind jeweils an den Randabschnitten der Formsegmente 3.1 - 3.9 angeordnet. Innenseitig weisen die Seitenschalen 5.1, 5.2 mittig jeweils einen kreisförmigen Freiraum 7.1, 7.2 auf. Randseitig sind die kreisförmigen Freiräume 7.1, 7.2 jeweils von einem im wesentlichen ringförmigen Wulstring 9.1, 9.2 umgrenzt.

Bei der Anwendung der Vulkanisierform 1 liegt diese, wie in Fig. 1 dargestellt, in einer Haltevorrichtung (nicht dargestellt) ein. Der Wulstring 7.2 ist dabei ohne weitere Befestigungsmittel unverlierbar in der horizontal angeordneten, unten liegenden Seitenschale 5.2 gehaltert. Der Wulstring 7.1 der oben liegenden Seitenschale 5.1 ist über Schraubverbindungen 10 an der Seitenschale 5.1 befestigt.

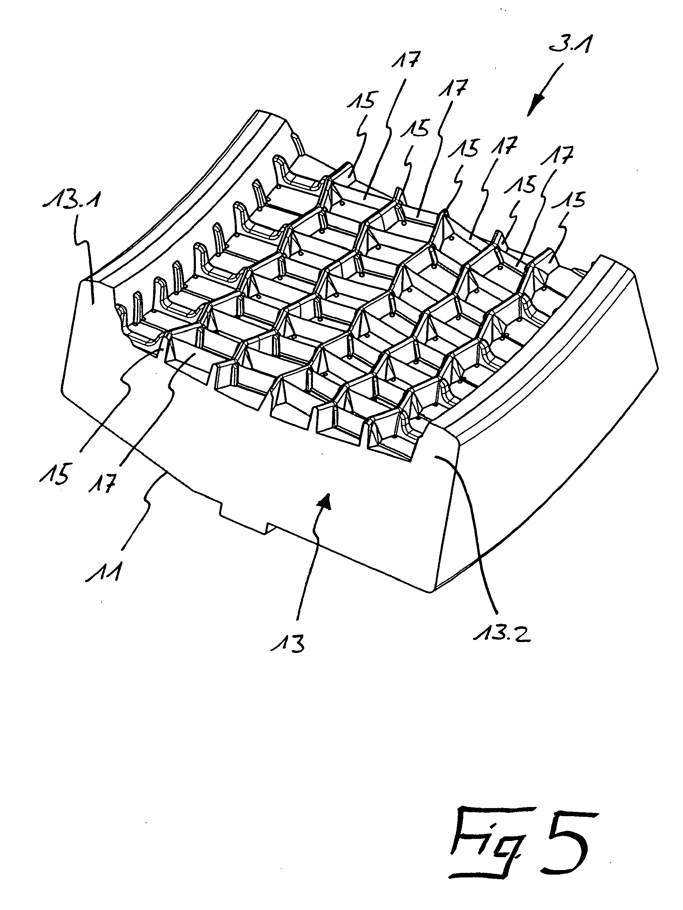

Die neun Formsegmente 3.1 - 3.9 sind jeweils im wesentlichen gleichförmig ausgebildet. Formsegment 3.1 ist in Fig. 5 näher dargestellt. Das Formsegment 3.1 weist ein leicht geschüsseltes, plattenförmiges Basisteil 11 mit einer im wesentlichen rechteckigen Form auf. An zwei ersten, gegenüberliegenden Seitenbereichen des Basisteils 11 wird dieses je von einem wallförmigen Abschnitt 13.1, 13.2, den sogenannten Segmentschultern, überragt. An zwei zweiten, gegenüberliegenden Seitenbereichen liegt das Formsegment mit seinen dortigen Seitenflächen, von denen in Fig. 5 nur eine, mit dem Bezugszeichen 13 gekennzeichnete Seitenfläche zu erkennen ist, gegen Seitenflächen benachbarter Formsegmente an. Die neun Formsegmente 3.1 - 3.9 bilden im zusammengebauten Zustand der Vulkanisierform 1 damit einen durchgehenden Ring. Dieser Ring wird beidseitig von zwei ringförmigen Abschnitten begrenzt, der durch die jeweiligen Segmentschultern der Formsegmente 3.1 - 3.9, die den Segmentschulgtern 13.1, 13.2 entsprechen, gebildet ist. Im zusammengebauten Zustand der Vulkanisierform 1 liegt je eine Seitenschale 5.1, 5.2 an Segmentschultern, entsprechend den Segmentschultern 13.1, 13.2, an.

Der sich zwischen den Segmentschultern 13.1, 13.2 erstreckende Bereich des Formsegmentes 3.1 weist Rippen 15 und Lamellen 17 auf. Die Rippen 15 sind einstückig aus dem Formsegment 3.1 ausgeformt, während die Lamellen 17 als eigenständige Komponenten ausgebildet sind, also zunächst einzeln gefertigt und erst anschließend in das Formsegment 3.1 eingesetzt wurden. Die Rippen 15 velaufen zick-zackförmig im wesentlichen parallel zu den Segmentschultern 13.1, 13.2, während die Lamellen 17 benachbarte Rippen 15 miteinander verbinden und dabei im wesentlichen rechtwinklig zum Verlauf der Rippen 15 angeordnet sind.

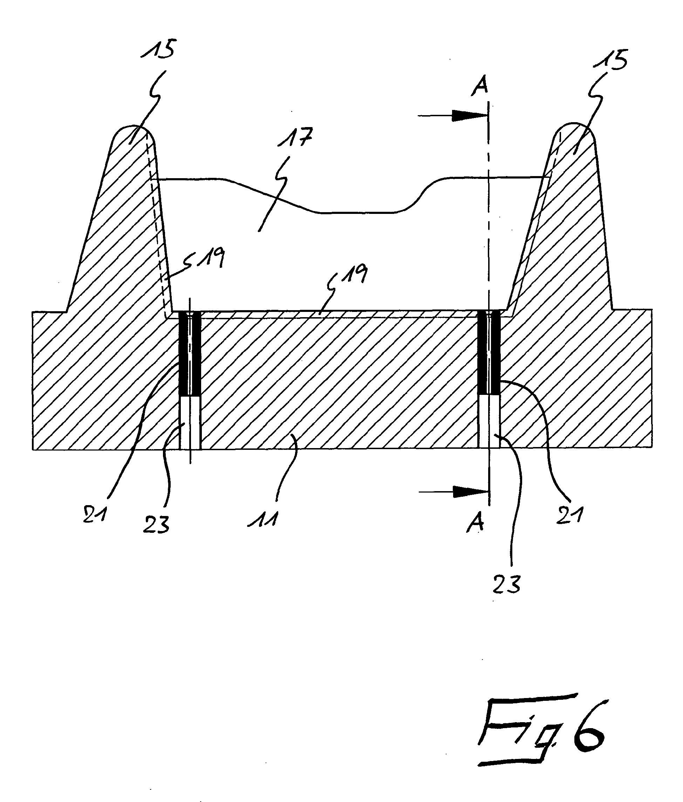

Fig. 6 ist eine Schnittansicht eines Abschnittes des Formsegmentes 3.1 im Bereich zweier benachbarter Rippen 15. Gut zu erkennen ist, dass die Rippen 15 einstückig aus dem Formsegment 3.1 ausgeformt sind (schraffierte Fläche). Eine Lamelle 17 verbindet die beiden Rippen 15 miteinander und ist zur Befestigung im Formsegment 3.1 in eine in diesem ausgebildete Nut 19 eingesetzt.

Am Fußpunkt der Rippen 15 ist unmittelbar neben und beidseitig der Lamelle 17 jeweils ein Ent- und Belüftungsmittel 21 in Form eines Entlüftungsstiftes angeordnet, der jeweils in eine Öffnung in Form einer im Basisteil 11 angeordneten Bohrung 23 eingebracht ist. Der Querschnitt der Bohrungen 23 wird durch die Entlüftungsstifte 21 verengt. Entsprechende Entlüftungsstifte 21 sind in gleicher Weise an den Fußpunkten sämtlicher Rippen 15, jeweils unmittelbar neben den Lamellen 17, angeordnet.

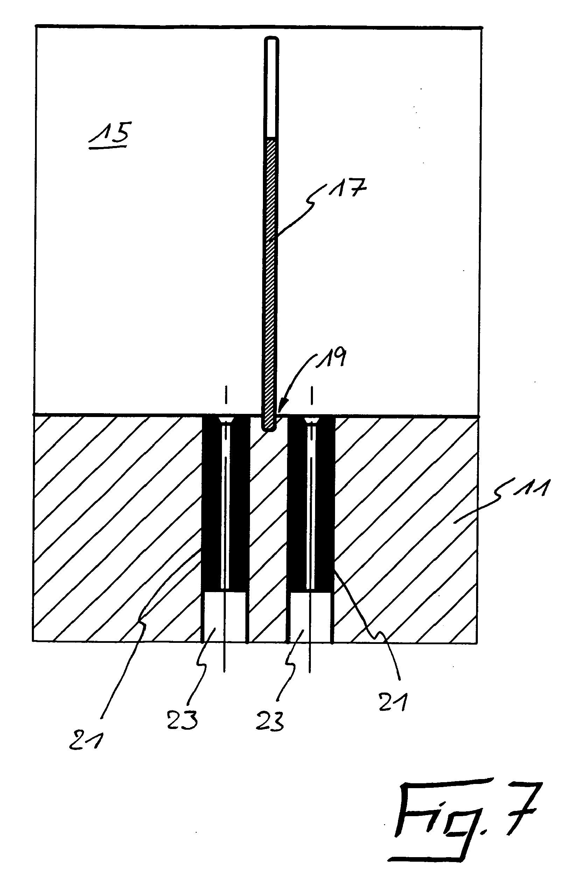

Fig. 7 ist eine Schnittansicht entlang der Schnittlinie A - A gemäß Fig. 6. Gut zu erkennen ist hier insbesondere, dass die Entlüftungsstifte 21 jeweils zu beiden Seiten einer Lamelle 17 am Fußpunkt einer Rippe 15 angeordnet sind.

Die Formsegmente 3.1 - 3.9 bestehen jeweils aus Aluminium, während die Seitenschalen 5.1, 5.2 und die Wulstringe 9.1, 9.2 jeweils aus Stahl bestehen. Die Lamellen 17 sowie die Entlüftungsstifte 21 bestehen jeweils aus Edelstahl.

Bei dem in den Figuren dargestellten Ausführungsbeispiel der Erfindung weisen ausschließlich die Lamellen 17 sowie die Entlüftungsstifte 21 durch Vakuum-Beschichtungs-Verfahren aufgetragene Beschichtungen auf. Die übrigen Komponenten und Bereiche der Vulkanisierform 1 weisen keine durch Vakuum-Beschichtungs-Verfahren aufgetragene Beschichtungen auf.

Die Lamellen 17 weisen eine durch ein PVD-Verfahren im Form eines HPMS-Verfahrens aufgetragene Beschichtung auf. Die Beschichtung wurde durch ein Niedertemperaturverfahren bei einer Temperatur von etwa 150°C aufgetragen. Konkret wurde auf die Lamellen 17 eine keramische Beschichtung auf Basis Titan in einer Dicke von etwa 3 µm aufgetragen.

Die Entlüftungsstifte 21 weisen eine durch ein Plasma-CVD-Verfahren aufgetragene DLC-Schicht in einer Dicke von etwa 2 µm auf.

## Patentansprüche

1. Element (3.1 - 3.9; 5.1, 5.2; 9.1, 9.2) einer Vulkanisierform (1) zur Herstellung von Gummiprodukten, insbesondere zur Herstellung von Fahrzeugreifen, das wenigstens eine durch ein Vakuum-Beschichtungs-Verfahren aufgetragene Beschichtung aufweist.

2. Element (3.1 - 3.9; 5.1, 5.2; 9.1, 9.2) nach Anspruch 1, bei dem die Beschichtung durch ein CVD-Verfahren oder ein PVD-Verfahren aufgetragen ist.

3. Element (3.1 - 3.9; 5.1, 5.2; 9.1, 9.2) nach Anspruch 1 in Form eines Formsegmentes (3.1 - 3.9) einer Vulkanisierform, einer Seitenschale (5.1, 5.2) einer Vulkanisierform oder eines Wulstringes (9.1, 9.2) einer Vulkanisierform.

4. Element (3.1 - 3.9; 5.1, 5.2; 9.1, 9.2) nach Anspruch 1, das an Bereichen, die beim Vulkanisieren in Kontakt mit dem Gummi des zu vulkanisierenden Gummiproduktes treten, die Beschichtung nur abschnittsweise aufweist.

5. Element (3.1 - 3.9; 5.1, 5.2; 9.1, 9.2) nach Anspruch 1 in Form eines Lamellen (17) aufweisenden Formsegmentes (3.1 - 3.9) einer Vulkanisierform, wobei wenigstens ein Teil der Lamellen (17) die Beschichtung aufweist.

6. Element (3.1 - 3.9; 5.1, 5.2; 9.1, 9.2) nach Anspruch 1 in Form eines Ent- und Belüftungsmittel (21) aufweisenden Elementes (3.1 - 3.9; 5.1, 5.2; 9.1 , 9.2) einer Vulkanisierform, wobei wenigstens ein Teil der Ent- und Belüftungsmittel (21) die Beschichtung aufweist.

7. Element (3.1 - 3.9; 5.1, 5.2; 9.1, 9.2) nach Anspruch 6 mit Ent- und Belüftungsmitteln (21) in Form von Ent- und Belüftungsventilen.

8. Element (3.1 - 3.9; 5.1, 5.2; 9.1, 9.2) nach Anspruch 1, das verschiedene durch ein Vakuum-Beschichtungs-Verfahren aufgetragene Beschichtungen aufweist.

9. Vulkanisierform (1), insbesondere für Fahrzeugreifen, mit wenigstens einem Element (3.1 - 3.9; 5.1, 5.2; 9.1, 9.2) nach Anspruch 1.

10. Verfahren zur Herstellung eines Elementes (3.1 - 3.9; 5.1, 5.2; 9.1, 9.2) einer Vulkanisierform (1) zur Herstellung von Gummiprodukten, insbesondere zur Herstellung von Fahrzeugreifen, bei dem zunächst wenigstens eine erste Komponente zur Verfügung gestellt wird, die keine durch ein Vakuum-Beschichtungs-Verfahren aufgetragene Beschichtung aufweist, und wenigstens eine zweite Komponente (17; 21) zur Verfügung gestellt wird, die wenigstens eine durch ein Vakuum-Beschichtungs-Verfahren aufgetragene Beschichtung aufweist, und bei dem die wenigstens eine erste und die wenigstens eine zweite Komponente (17; 21) anschließend zu dem Element (3.1 - 3.9; 5.1, 5.2; 9.1, 9.2) einer Vulkanisierform konfektioniert werden.

11. Verfahren nach Anspruch 10 mit wenigstens einer zweiten Komponente in Form von Ent- und Belüftungsmitteln (21).

12. Verfahren nach Anspruch 10 mit wenigstens einer zweiten Komponenten in Form von Lamellen (17).

13. Verfahren nach Anspruch 10, bei dem die zweiten Komponenten (17; 21) durch wenigstens eine der folgenden Techniken mit der wenigstens einen ersten Komponente verbunden werden: Kleben, Löten, Verschweißen, Verriegelungstechniken oder Eingießen.

14. Verfahren nach Anspruch 10, bei dem wenigstens ein Teil der zweiten Komponenten (17; 21) eine durch ein HPMS-Verfahren aufgetragene Beschichtung aufweisen.

15. Verfahren nach Anspruch 10, bei dem wenigstens ein Teil der zweiten Komponenten (17; 21) eine durch ein Niedertemperaturverfahren aufgetragene Beschichtung aufweisen, vorzugsweise bei einer Verfahrenstemperatur unterhalb 200°C.
